# EUROPÄISCHE PATENTSCHRIFT

(11) **EP 1 062 481 B1**
(45) Veröffentlichungstag und Bekanntmachung des Hinweises auf die Patenterteilung: **27.04.2005**
(21) Anmeldenummer: 99917777.7
(22) Anmeldetag: 09.03.1999
(51) Int. Cl.: G01C 21/20, G08G 1/09, H04H 1/00

(54) **VERFAHREN ZUR AUSGABE VON VERKEHRSINFORMATIONEN**
METHOD FOR ISSUING TRAFFIC INFORMATION
PROCEDE D'AFFICHAGE D'INFORMATIONS DE TRAFIC

(30) Priorität: 10.03.1998 DE 19810173
(43) Veröffentlichungstag der Anmeldung: 27.12.2000
(73) Patentinhaber: ROBERT BOSCH GMBH, 70442 Stuttgart (DE)
(72) Erfinder: KYNAST, Andreas, D-31139 Hildesheim (DE); KERSKEN, Ulrich, D-31199 Diekholzen (DE)
(86) Internationale Anmeldenummer: PCT/DE1999/000632
(87) Internationale Veröffentlichungsnummer: WO 1999/046562

(56) Entgegenhaltungen:
- EP-A- 0 790 591
- DE-A- 3 810 177
- DE-A- 19 516 477

## Beschreibung

Die Erfindung geht aus von einem Verfahren zur Ausgabe von Verkehrsinformationen nach der Gattung der unabhängigen Ansprüche.

### Stand der Technik

Aus der EP 0790 591 A1 ist bereits eine Ortsdatenbank für die Ermittlung von Routen innerhalb eines Verkehrswegenetzes bekannt. Solche Ortsdatenbanken sind insbesondere für Verkehrsrundfunkempfänger zweckmäßig, die Einrichtungen zum Empfang und zur Dekodierung von digital codierten Verkehrsmeldungen enthalten. Diese digital codierten Verkehrsmeldungen enthalten in abgekürzter und verschlüsselter Form Verkehrsinformationen, die in Verbindung mit den Ortsdatenbanken gesprochen ausgegeben werden können, oder aber bildlich darstellbar sind. In der oben genannten Druckschrift wird nun vorgeschlagen, diese Ortsdatenbanken dahingehend zu erweitern, daß zumindest die Hauptrouten eines Verkehswegenetzes darstellbar sind. Durch die Verknüpfung der Verkehrswege untereinander wird es möglich, mittels dieser Ortsdatenbanken eine einfache Navigation auf der Grundlage dieser Daten durchzuführen. Weiterhin enthält die Datenbasis Segmente, mit denen es möglich ist, größere Streckenabschnitte einer Bundesstraße oder einer Autobahn näher zu kennzeichnen (Alert C, Traffic Message Coding Protokoll, November 1990, Seite 8,9). Mit den somit vorhandenen Informationen ist es möglich, eine einfache Navigation durchzuführen und dem Fahrer eines Fahrzeuges auf Hauptstraßen zu leiten.

Weiterhin gibt es Navigationssysteme bei dem an Bord eines Fahrzeuges eine digitale Straßenkarte mitgeführt wird. Nach Eingabe des Start- und des Zielortes werden dann optische oder akustische Fahranweisungen ausgegeben, mit denen es möglich ist, den Fahrer eines Fahrzeuges exakt an sein gewünschtes Ziel zu bringen. Derartige Navigationssysteme sind jedoch relativ aufwendig und erfordern einen hohen Aufwand für die Bereitstellung digitaler Straßenkarten sowie für die Navigation. Weiterhin ist dabei zu berücksichtigen, daß die bei diesen Navigationsgeräten gegebenen Informationen, wie zum Beispiel "Nach 100m links abbiegen", zwar für den Fahrer klar verständlich sind, aber er jedoch ein großes Vertrauen in die Navigation einbringen muss, da er sich selber mit den am Straßenrand aufgestellten Schildern, die ganz andere Fahrthinweise geben, nicht identifizieren kann. Ebenso ist die Sache dann zu sehen, wenn der Fahrer eines Fahrzeuges kein Navigationssystem an Bord hat, jedoch über mobile Funkgeräte mit dem Navigationssystem eines Netzbetreibers verbunden ist, der ihm dann auf Anforderung und gegen Gebühr Fahranweisungen zur Verfügung stellt, die in etwa dem entsprechen, wie sie bei Onboard-Navigationssystemen zur Verfügung gestellt werden.

Aus DE-A-195 16 477 ist ein Fahrerinformationssystem bekannt, das ein Fahrzeugnavigationssystem und einen Empfänger für digital codierte Verkehrsmeldungen, die zum Datenaustausch miteinander verbunden sind, umfasst. Die Navigationskomponente berücksichtigt mittels des Empfängers empfangene Verkehrsinformationen, wie beispielsweise über Staus oder Streckensperrungen, bei der Routenberechnung. Umgekehrt nutzt der Empfänger eine durch die Navigationskomponente ermittelte Information über einen aktuellen Empfängerstandort zur Selektion wiederzugebender oder an die Navigationskomponente zur Routenplanung zu übertragender aus der Menge aller empfangener Verkehrsmeldungen. Während die den Verkehrsmeldungen zugrunde liegende Codierung im wesentlichen auf die Codierung ausgewählter Orte wie Straßenkreuzungen, Autobahnanschlüsse, beschränkt ist, liegen der Navigationskomponente Informationen in Form von Straßenkarten vor. Daher ist eine Umsetzung von der Verkehrsinformations-Codierung in das Straßenkartenformat erforderlich.

### Vorteile der Erfindung

Das erfindungsgemäße Verfahren gemäß dem unabhängigen Patentanspruch hat den Vorteil, dass dem Fahrer eines Fahrzeugs mit TMC-Datenbank Fahrtrichtungshinweise gegeben werden können, in dem die auf der Datenbank abgelegten Segmentnamen mit ausgegeben werden. Hat das Fahrzeug kein Navigationssystem, so wird durch die Ausgabe von Segmentnamen der TMC-Datenbank erreicht, dass der Fahrer des Fahrzeuges Informationen erhält, die er auf Schildern am Rande der Straße wiederfindet, da Segmentnamen bei TMC üblicherweise größere Regionen oder größere Städte kennzeichnen. Hat der Fahrer eines Fahrzeugs ein Navigationssystem an Bord, oder steht per Funk mit einem Navigationssystem in Verbindung, so kann durch die Ausgabe von Segmentnamen erreicht werden, daß er nicht nur einen Hinweis bekommt, daß er nach einer bestimmten Anzahl von Metern nach rechts oder links abbiegen soll, sondern er erhält zusätzlich die Hinweise, in welche Fahrtrichtung er sich dadurch bewegt. Durch diese Hinweise, die er leicht an den Verkehrstafeln am Straßenrand verifizieren kann, wird das Sicherheitsgefühl des Fahrers im Bezug auf die ihm gegebenen Verkehrshinweise erhöht, so daß das Vertrauen des Fahrers in das Navigationssystem beziehungsweise in die Verkehrshinweise erhöht wird.

Durch die Unteransprüche sind vorteilhafte Weiterbildungen und Verbesserungen des erfindungsgemäßen Verfahrens bei der Ausgabe von Verkehrsinformationen gegeben. Vorteilhaft ist insbesondere, den Startort und den Zielort mit einer Funkeinrichtung an eine Zentrale zu übertragen, und die Fahrtrichtungshinweise aus der in der Zentrale abgelegten TMC-Datenbank und ggf. aus der digitalen Karte zu ermitteln und dann an die absendende Stelle zurück zu übertragen. Durch diese Maßnahme ergibt sich der Vorteil, daß die Datenbanken selbst durch den Diensteanbieter immer in einem aktuellen Zustand gehalten werden können, da sie von zentraler Stelle aus gewartet und gepflegt werden. Als weiterer Vorteil ist anzusehen, daß der Fahrer eines Fahrzeuges selbst keine Datenbanken in seinem Fahrzeug mitführen muß. Weiterhin ist vorteilhaft, die Fahrtrichtungshinweise in einem vorgegebenen Abschnitt vor dem Zwischenzielort auszugeben. Durch diese Maßnahme wird erreicht, daß der Fahrer, der die Fahrtrichtungshinweise hört, kurze Zeit danach auf Streckentafeln erkennen kann, in welche Richtung er fahren muß. Durch diese Verifizierung wird einerseits des Vertrauen des Fahrers in die Navigationseinrichtung erhöht und andererseits erreicht, daß sich der Fahrer recht frühzeitig auf eventuelle Abbiegemanöver einstellen kann oder aber darüber beruhigt ist, daß er an bestimmten neuralgischen Punkten nicht auf Verkehrszeichen achten muß, da er geradeaus weiterfahren soll.

Vorteilhaft ist es auch, daß aufgrund der auf der TMC-Datenbank abgelegten Information über den geographischen Ort des Zwischenzielortes eine Richtungsinformation auf den in Fahrtrichtung nächsten Zwischenzielort ausgegeben wird. Da insbesondere bei deutschen Autobahnen üblicherweise die nächste Autobahnausfahrt mit angegeben ist, die beispielhaft als Zwischenzielort anzusehen ist, wird dadurch erreicht, daß der Fahrer eines Fahrzeuges zumindest über die nächstgelegene Ausfahrt sicher informiert ist und deswegen eine Übereinstimmung mit Anzeigen auf den Streckentafeln und Hinweisen des Navigationsgerätes gegeben ist. Durch die Ausgabe von mehr als einem Segmentnamen, nämlich auch der weiteren Ausgabe von nachfolgenden Segmentnamen wird erreicht, daß die Genauigkeit der Angaben für den Fahrer erhöht wird, insbesondere dann, wenn die gespeicherten Segmentnamen nur kleine Städte betreffen, die ortunkundigen Fahrern weniger bekannt sind. Weiterhin ist es vorteilhaft, der TMC-Datenbank weitere markante Punkte, insbesondere größere Orte zuzufügen, die die auf den TMC-Datenbanken abgelegten Zwischenzielorte ergänzen. Durch diese Maßnahmen wird eine Zielfindung und die Ausgabe von Verkehrsinformationen auch dann ermöglicht, wenn der Fahrer eines Fahrzeugs konkrete Abzweigungen nicht kennt, sondern andere markante Punkte, wie beispielsweise einen Städtenamen eingibt. Vorteilhaft ist es auch, nur an den Zwischenzielorten, an denen Merker vom Benutzer gesetzt sind, Fahrtrichtungsweise auszugeben. Bewegt sich daher ein Fahrer eines Fahrzeugs in einem bekannten Gebiet, wo er keine Fahrtrichtungshinweise benötigt, werden dann keine Fahrtrichtungshinweise ausgegeben, so daß er andere Informationen, beispielsweise ein Rundfunkprogramm hören kann. Erst wenn er ihm bekanntes Gelände verläßt, werden die Fahrtrichtungshinweise ausgegeben. Vorteilhaft ist auch, daß beim Verlassen einer vorgegebenen Route eine neue Route berechnet wird und die dann dazugehörigen Fahrtrichtungshinweise an den entsprechenden Zwischenzielorten ausgegeben werden. Wird beispielsweise durch das Positionsmittel festgestellt, daß der Fahrer eines Fahrzeuges eine bestimmte Straße nicht verlassen hat, obwohl er dazu aufgefordert wurde, ist es nunmehr möglich, eine neue Route zu berechnen und an den neuen Zwischenzielorten wieder Fahrtrichtungshinweise auszugeben. Vorteilhaft ist es weiterhin, die TMC-Datenbank durch einen TMC-Empfänger zu ergänzen, der die codierten Verkehrshinweise empfangen kann um diese in die Routenberechnung zu integrieren. Werden daher auf bestimmten Strecken Staus gemeldet, so wird es dadurch möglich, eine andere Verkehrsführung zu wählen und zu berechnen und entsprechende Fahrtrichtungshinweise auszugeben. Vorteilhaft ist es weiterhin, die Verkehrshinweise mit Angaben über die Namen und/oder die Anzahl der in Fahrtrichtung liegenden Zwischenzielorte und/oder Zielorte und/oder Abfahrten und/oder Abzweigungen zu versehen. Dadurch wird erreicht, daß der Fahrer über eventuell bestehende Verkehrsstörungen informiert ist und nicht verwundert ist, wenn aufgrund der Routenberechnung von einem altgewohnten Weg abgewichen wird.

Von Vorteil ist es auch, eine Angabe über eine aktuelle Entfernung zu einem Stau und/oder einer Verkehrsbehinderung auszugeben, da dadurch erreicht wird, daß der Fahrer auch selbst abschätzen kann, wie lange er noch auf einer bestimmten Straße verbleiben kann, ohne in Gefahr zu geraten, in einen Stau hineinzufahren. Das gleiche ist bezüglich einer Längeninformation eines Staus zu sagen, wo der Fahrer dann überlegen kann, ob er evtl. einer Umleitungsempfehlung folgen möchte oder nicht. Ist eine neue Route berechnet worden, so ist es vorteilhaft die Fahrtrichtungshinweise so zu modifizieren, daß einem möglichen Stau ausgewichen wird.

In einer vorteilhaften Weiterbildung kann das in der Ortsdatenbasis eingestellte Straßennetz durch eindeutige Stützpunkte ergänzt werden, die keine Abzweigemöglichkeit darstellen, sondern zur genaueren Beschreibung des Straßennetzes dienen. Dadurch ist besser feststellbar, ob sich das Fahrzeug auf der vorgesehenen Route befindet oder ob es bereits davon abgewichen ist. Gerade im Bereich großer Straßendichten oder sehr nah parallel verlaufender Straßen ist die Ergänzung von zusätzlichen Stützpunkten sinnvoll. Durch Referenzierung eines Punktes auf einen nah entfernten Punkt eines anderen Straßenabschnittes kann auf einfache Weise auch festgelegt werden, daß hier ein Kreuzungspunkt existiert, das heißt, daß man an dieser Stelle von einer Straße auf eine andere Straße fahren kann. Vorteilhaft ist es auch, daß die Ausgabe der Fahrtrichtungshinweise die Namen der in Fahrtrichtung liegenden Segmente und/oder von Kreuzungspunkten umfaßt. Durch diese Maßnahme wird erreicht, daß durch die Ausgabe von mehreren Segmentnamen oder Kreuzungspunkten die Wahrscheinlichkeit groß ist, daß einer dieser Kreuzungspunkte oder Segmentnamen auf den Streckentafeln erscheint und so die Möglichkeit gegeben ist, daß der Fahrer die Fahrtrichtungshinweise an den Streckentafeln verifizieren kann. Vor Ga belungen ist es daher auch sinnvoll, Segmentnamen der in Fahrtrichtung folgenden Gabelungen auszugeben, insbesondere wenn das Segment nach der Gabelung weniger bekannte Orte enthält. Besonders vorteilhaft ist es auch, wenn die ausgegebenen Segmentnamen vor ihrer Ausgabe gewichtet werden, vorzugsweise nach der Größe der bezeichneten Orte und daß nur das Segment mit der größten Wichtung ausgegeben wird. Dadurch wird erreicht, daß Segmente, die nach kleinen, unbekannten Orten bezeichnet sind, unter Umständen gar nicht ausgegeben werden, sondern statt dessen Segmentinformationen gewonnen werden, die üblicherweise auch bei den großen Hinweisschildern angegeben sind.

### Zeichnungen

Die Erfindung wird nachfolgend in einem Ausführungsbeispiel anhand der zugehörigen Zeichnungen näher erläutert. Es zeigen:
Figur 1 ein Blockschaltbild einer beispielhaften Verschaltung eines Navigationssystems,
Figur 2 eine schematische Übersicht zur Routenberechnung nach Verzweigungspunkten,
Figur 3 eine schematische Übersicht zur Routenberechnung nach Sektoren um die Verzweigungspunkte,
Figur 4 eine schematische Darstellung eines in einer TMC-Ortsdatenbasis abgelegten Straßennetzes,
Figur 5b eine Detailansicht entsprechend Figur 5a und
Figur 5c eine weitere Detailansicht entsprechend Figur 5a.
Figur 6 die Darstellung eines Straßenteilnetzes auf der TMC-Ortsdatenbasis und
Figur 7 Richtungsangaben einer Route unter Zuhilfenahme einer TMC-Ortsdatenbasis.

### Beschreibung der Ausführungsbeispiele

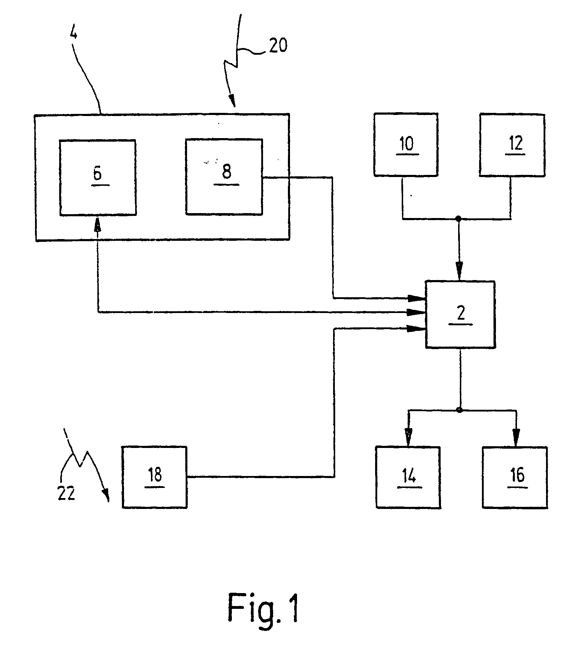

Figur 1 zeigt in einem schematischen Blockschaltbild eine beispielhafte Verschaltung eines Navigationssystems mit einer zentralen Recheneinheit 2, die auf in einer Datenbasis abgelegte Orts- und Straßeninformationen zugreifen kann. Eine derartige Datenbasis kann insbesondere eine TMC (Traffic-Message-Channel)-Ortsdatenbasis 6 sein.
Wie im dargestellten Ausführungsbeispiel kann diese TMC-Ortsdatenbasis 6 integrierter Bestandteil eines Autoradios 4 sein und beispielsweise in einer zusätzlichen Speicher- beziehungsweise Chipkarte oder ähnlichem enthalten sein. In dem Autoradio 4 muß weiterhin ein TMC-Empfänger 8 integriert sein, der herkömmlichen Radiosignalen codiert überlagerte Verkehrshinweise empfangen und decodieren kann und diese an die zentrale Recheneinheit 2 weiterleitet. Erkennbar ist weiterhin eine Verbindung zwischen der zentralen Recheneinheit 2 und einem Eingabeterminal 10 und/oder einer Einrichtung zur Spracheingabe 12 durch einen Benutzer beziehungsweise einen Fahrer, mit denen dieser gewünschte Start- und Zielorte vor einem Fahrtantritt eingeben und gegebenenfalls das Erreichen von Zwischenzielorten während der Fahrt quittieren kann. Die zentrale Recheneinheit 2 kann die Fahrtrichtungshinweise optisch und/oder akustisch an eine optische Ausgabeinheit 14 und/oder eine akustische Ausgabeinheit 16 weiterleiten. Optional kann weiterhin ein Ortungssystem vorgesehen sein, wie im dargestellten Ausführungsbeispiel ein GPS-Empfänger 18, der permanent aktuelle Standortdaten des Fahrzeugs mittels einer Satellitenpeilung berechnen und diese an die zentrale Recheneinheit 2 liefern kann und somit einen permanenten Abgleich mit der zuvor berechneten Route erlaubt. Zusätzlich zum GPS-Empfänger 18 kann auch ein DGPS-Empfänger (sogenanntes differentielles GPS) vorgesehen sein, der empfangene Satelliten-Funksignale mit zusätzlichen Satelliten-Funksignalen oder mit Funksignalen einer zusätzlichen Bodenstation (beispielsweise RDS-Signale) abgleichen und auf diese Weise eine Steigerung der Ortungsgenauigkeit erreichen kann. Die Funksignale, die von der GPS-Einheit 18 empfangen werden, sind hier durch ein Pfeilsymbol 22 angedeutet, die TMC-Signale, die dem Radiosignal codiert überlagert sind, durch ein Pfeilsymbol 20.

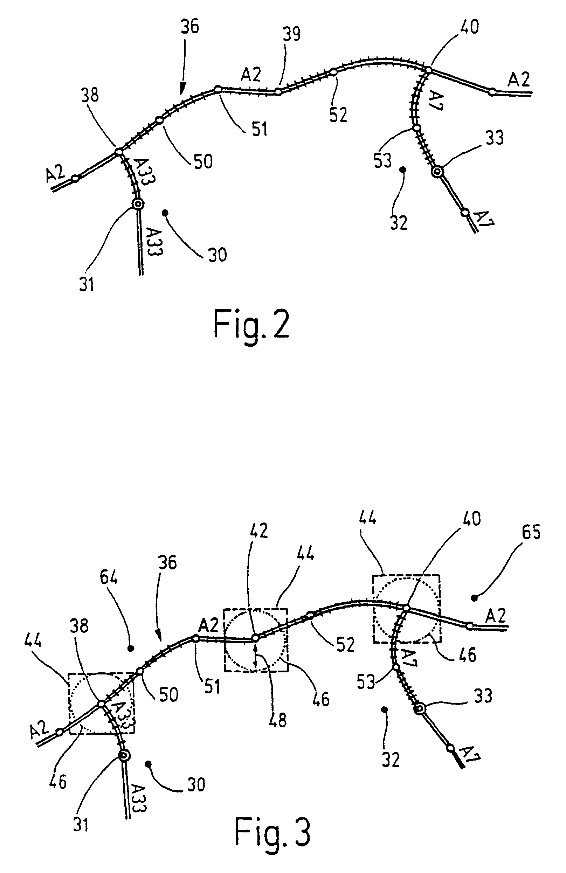

Figur 2 zeigt einen beispielhaften Ausschnitt einer in der Datenbasis abgespeicherten Karte, auf der eine berechnete Route 36 angedeutet ist. Die Berechnung der Route 36 erfolgt hierbei durch Verkettung von bestimmten in der TMC-Ortsdatenbasis 6 abgespeicherten Punkten. In dieser einfacheren Version ist keine zusätzliche Ortungsfunktion, beispielsweise durch eine GPS- oder DGPS-Einrichtung, vorgesehen. Die in der TMC-Ortsdatenbasis 6 enthaltenen Punkte, die für die Routensuche und -bestimmung verwendet werden, können vorzugsweise BAB(Bundesautobahn)-Abfahrten oder Kreuzungspunkte von Straßen sein. Nachdem der Benutzer beziehungsweise der Fahrer einen gewünschten Startort 30 und einen gewünschten Zielort 32 definiert und manuell oder durch Spracheingabe eingegeben hat, kann mittels der routensuchfähigen TMC-Ortsdatenbasis 6 eine oder mehrere unterschiedliche Routen 36 berechnet werden. Es ist dabei nicht notwendig, daß der Startort 30 und/oder der Zielort 32 in der TMC-Ortsdatenbasis 6 enthalten sind. Diese muß lediglich über eine Funktion verfügen, die solche nicht abgespeicherten Orten anderen, in der Nähe befindlichen und als Aufpunkt oder Startpunkt 31 beziehungsweise Endpunkt 33 geeigneten, Orten zuordnen kann. Beispielsweise wird einer oder mehrere der nächstliegenden Punkte in der Datenbasis 6 ausgewählt, oder es werden durch die Eingabe eines Gebietes, welches einem oder mehreren Punkten der TMC-Datenbasis 6 zugewiesen ist, Punkte der Datenbasis 6 ausgewählt.

Die eindeutige Beschreibung der Route 36 erfolgt durch eine sequentielle Ausgabe von bekannten Punkten, die in der TMC-Ortsdatenbasis 6 abgelegt sind, beispielsweise von Straßenkreuzungen und -gabelungen. Während der Fahrt können dem Fahrer dann optische und/oder akustische Fahrtrichtungshinweise gegeben werden, die ihm das Verfolgen der vorher bestimmten Route 36 durch gezielte Hinweise zum Wechseln oder zum Beibehalten einer bestimmten Straße ermöglichen. Beispielsweise kann immer dann ein Fahrtrichtungshinweis erfolgen, wenn ein Wechsel der Straße oder ein Abbiegen notwendig ist. Die Ausgabe dieser Hinweise erfolgt zweckmäßigerweise kurz vor einer Beschilderung und gegebenenfalls vor dem Erreichen des jeweiligen Abbiegepunktes.

Die Kommunikation zwischen dem Benutzer beziehungsweise dem Fahrer und der zentralen Recheneinheit 2 zur Routenauswahl kann beispielsweise auf folgende Weise ablaufen:

Der Fahrer gibt mittels der Eingabegeräte 10 und 12 einen Startort 30 und einen Zielort 32 ein. Alternativ können auch in der TMC-Datenbasis abgespeicherte Gebiete, die den Punkten 31 und 33 zugeordnet sind, eingegeben werden, innerhalb deren die Orte 30 und 32 liegen. Danach wird in der zentralen Recheneinheit 2 durch Abfrage der TMC-Datenbasis 6 eine Routensuche durchgeführt. Die Route 36 von den in der Datenbasis 6 enthaltenen und den realen Start- und Zielpunkten 30 und 32 am nächsten kommenden Startpunkt 31 zum Endpunkt 33 wird durch eine verkettete Liste von Punkten 31-38-50-51-39-52-40-53-33 beschrieben. Die TMC-Ortsdatenbasis 6 beschreibt Straßen des Straßennetzes nur mit den Punkten 31-38-50-51-39-52-40-53-33, an denen die Straßen Verbindungen zu anderen Straßen aufweisen und wo ein Abbiegen für den Fahrer möglich und sinnvoll ist. Die Punkte 38, 40 und 33 sind ausgezeichnete Punkte in der verketteten Liste, da an ihnen dem Fahrer Fahrtrichtungshinweise gegeben werden müssen. Für den Startort 30 und Zielort 32 müssen ebenfalls Fahrtrichtungshinweise mittels optischer und/oder akustischer Ausgabe erfolgen. Start 30 und Ziel 32 können nicht immer exakt eingegeben werden, da eine Beschränkung auf das durch die TMC-Ortsdatenbasis 6 aufgespannte Straßennetz notwendig ist. Zudem kann bei der Start- und Zieleingabe eine Einschränkung auf eine bestimmte Anzahl von Orten erfolgen. Für den Weg vom Startort 30 zum Startpunkt 31 der Route kann beispielsweise ein Fahrtrichtungshinweis:
"Bitte auf die A33 in Richtung Bielefeld auffahren"
ausgegeben werden beziehungsweise mit einem Richtungspfeil sowie einer Entfernungsangabe in Richtung des Startpunktes 30 gezeigt werden (Vogelfluglinie). Während der Fahrt kann an einem Abbiegepunkt 38 beispielsweise ein Hinweis der Form:
"Bitte am nächsten Autobahndreieck auf die A2 in Richtung Hannover fahren"
ausgegeben werden. Kurz vor Erreichen des Endpunktes der Route 33 kann dann ein Fahrtrichtungshinweis für den Weg zum Zielort 32 der Form:
"Bitte an der nächsten Abfahrt die Autobahn verlassen! Sie befinden sich im Zielgebiet. Es erfolgen keine weiteren Hinweise mehr"
optisch und/oder akustisch augegeben werden.

In einer weiteren Variante können dem Fahrer Alternativrouten vorgeschlagen werden, die er durch Bestätigung aussuchen kann, beispielsweise in der Form:
"Möchten Sie von BREMEN nach BERLIN über HAMBURG fahren?",
was der Fahrer entweder ablehnen oder bestätigen kann. Bei einer Ablehnung kann eine weitere Route vorgeschlagen werden, beispielsweise in der Form:
"Möchten Sie von BREMEN nach BERLIN über HANNOVER fahren?",
was der Fahrer wiederum ablehnen oder bestätigen kann. Eine vom Fahrer bestätigte Route wird dann der weiteren Berechnung einer Route 36 und der sequentiellen Ausgabe von Fahrtrichtungshinweisen zugrunde gelegt.

Die Fahrtrichtungshinweise selbst können auf verschiedenartige Weise optisch und/oder akustisch an den Fahrer ausgegeben werden. So kann beispielsweise jeder Ort in der den Weg beschreibenden Liste von Orten mit bestimmten Attributen versehen sein, wie dem Ortsnamen, dem Straßentyp (A für Autobahnen, L für Bundesstraßen, etc.) und der Straßenbezeichnung (beispielsweise A2, B 229, etc.). Fahrtrichtungshinweise erfolgen sinnvollerweise dann, wenn der Straßentyp und/oder die Straßenbezeichnung wechseln, beispielsweise in der Form:
"Bitte an der nächsten Abfahrt auf die A7 in Richtung Hannover fahren".

Zusätzlich ist eine Überprüfung sinnvoll, ob mindestens zwei Orte auf der neuen Straße liegen. Wenn dies nicht der Fall ist, wird die neue Straße nur überquert.

Alternativ kann eine Route 36, die aus einer verketteten Liste von Orten besteht, durch den Fahrer nacheinander abgefragt und an für ihn wichtigen Orten mit einem Merker versehen werden. Fahrtrichtungshinweise erfolgen in diesem Fall an diesen durch Merker vorbestimmten Orten. So könnte beispielsweise der Ort 39 in Figur 2 mit einem Merker versehen sein. An diesem Ort soll die Straße jedoch nicht verlassen werden, was beispielsweise durch folgenden Fahrtrichtungshinweis ausgedrückt werden kann:
"Bitte weiter auf der A2 in Richtung Hannover fahren".

Zusätzlich können Hinweise auf einen Rastplatz oder eine Tankstelle durch Merker in die Wegbeschreibung integriert werden. Auch eine Verkettung dieser beschriebenen Methoden ist möglich. So kann der Fahrer zusätzliche Punkte eingeben, an denen er Fahrtrichtungshinweise erhalten will, beispielsweise an Strekken mit vielen Ausfahrten oder an Autobahnkreuzen. Ein aktueller Fahrtrichtungshinweis kann, beispielsweise durch Knopfdruck, jederzeit abgefragt werden. Ein sequentielles Vor- und Zurückblättern ist zweckmäßigerweise ebenfalls möglich. Weiterhin kann zu Kontrollzwecken die aktuell befahrene Straße abgefragt beziehungsweise ständig angezeigt werden.

Figur 3 zeigt einen weiteren beispielhaften Ausschnitt einer Karte, auf der eine berechnete Route 36 angedeutet ist. Gleiche Teile wie in den vorangegangenen Figuren sind mit gleichen Bezugszeichen versehen und nicht nochmals erläutert. Das Fahrzeug ist hierbei mit einer zusätzlichen Ortungseinrichtung ausgerüstet, beispielsweise mit einem GPS-System 18 (gegebenenfalls auch mit einem DGPS-Ortungssystem). Die Starteingabe durch den Fahrer kann hierbei entfallen, da über das GPS-System 18 eine automatische Ortsbestimmung und durch die Recheneinheit 2 eine Zuordnung zu dem nächstliegenden in der TMC-Ortsdatenbasis 6 abgespeicherten Ort erfolgt. Die Kreuzungspunkte 38 und 40 sind hierbei zusätzlich durch umgebende Sektoren 44 und 46 gekennzeichnet, die einen Bereich um die Punkte 38 und 40 bilden, an denen ein Fahrtrichtungswechsel erfolgen kann. Bei einer solchen Kombination aller eine Route beschreibenden Punkte einer verketteten Liste einer TMC-Ortsdatenbasis 6, mit einer GPS-Standortbestimmung können Abweichungen von der vorgeschlagenen Fahrtroute 36 jederzeit erkannt und durch entsprechende Hinweise an den Benutzer beziehungsweise Fahrer korrigiert werden. Es ist somit eine ständige Anpassung der jeweiligen Route an den sich verändernden Aufenthaltsort des Fahrzeuges möglich.

Bei einer Annäherung an einen voreingestellten Ort 38, 40 oder 42 durch Erreichen eines diesen umgebenden rechteckförmigen 44 oder kreisförmigen Sektors 46 kann jeweils ein Fahrtrichtungshinweis ausgegeben werden. Diese Sektoren 44 und 46 können einen Radius 48 bestimmter Entfernung um die Orte 38, 40 und 42 aufweisen, ab dem die Ausgabe eines Fahrtrichtungshinweises sinnvoll ist. Auch in dieser Variante ist ein manuelles sequentielles Vor- und Zurückblättern durch den Fahrer möglich, aufgrund der ständigen GPS-Ortung jedoch nicht unbedingt notwendig.

Neben der Erkennung von Abweichungen von der vorgeschlagenen Route ist ein solches System mit Ortungsfunktion auch in der Lage, das Fahren in die falsche Richtung zu erkennen (wenn beispielsweise zuerst der Punkt 51 und danach erst Punkt 50 erreicht wird), was dem Fahrer durch einen Hinweis wie:
"Sie sind auf der A7, fahren jedoch in die falsche Richtung. Bitte an der nächsten Abfahrt die A7 verlassen und in Richtung Hamburg wieder auffahren"
mitgeteilt werden kann.

Vorteilhaft lassen sich weiterhin die Informationen eines TMC-Empfängers 8 integrieren, der im Rundfunksignal 20 für das Autoradio 4 überlagerte codierte Verkehrshinweise empfangen und an die zentrale Recheneinheit 2 liefern kann. Werden für die noch zurückzulegende berechnete Route Verkehrsstörungen gemeldet, kann jederzeit eine Neuberechnung der Fahrtroute erfolgen, wobei dem Fahrer entsprechend neue Fahrtrichtungshinweise ausgegeben werden. Diese Hinweise können auf einfache Weise ohne Angabe von Ortsnamen, nur durch Entfernung zur Verkehrsstörung und die Länge bezogen auf Punkte in der Ortsdatenbasis, angezeigt werden, beispielsweise in folgender Form:
"Auf der A7 ist von der übernächsten Abfahrt an ein drei Abfahrten langer Stau".

Fahrtrichtungshinweise der Form "...in Richtung x..." können durch die Namen der in der TMC-Ortsdatenbasis 6 abgelegten Segmente bestimmt werden. Bei Fahrtrichtungshinweisen mit einer Ausgabe "... in Richtung x, y ..." können diese Namen x, y und die folgenden Namen durch in Fahrtrichtung aneinander gereihte Segmente bestimmt werden. Auch Verzweigungen der Straßen lassen sich durch Bestimmung der Segmentnamen der Verzweigungen bestimmen.

Weiterhin sind ergänzende Fahrtrichtungshinweise möglich durch Orte 42, die keine Abzweigungen darstellen, sondern zur verständlicheren Beschreibung der Fahrtroute dienen. So ist leichter feststellbar, ob das Fahrzeug weiterhin die vorgesehene Route verfolgt, was in Bereichen hoher Straßendichte die Orientierung für den Fahrer erleichtert. Zudem kann es sinnvoll sein, bestimmten Segmenten an der Route 36 ausgewählte Namen zuzuordnen, die auf die Straßenbeschilderung abgestimmt sind. So sind beispielsweise die Segmentnamen 64 und 65 größerer Städte, auf die entsprechend der realen Straßenbeschilderung bei Richtungsangaben Bezug genommen werden kann, ohne daß diese auf der Route 36 liegen müssen. Eine derartige zusätzliche Integration ausgewählter Segmentnamen 64 und 65 berücksichtigt besser die tatsächliche Situation eines ortsunkundigen Fahrers, der auf die Beschilderungen achtet und dem die zuerst genannten - meist größeren - Orte mehr auffallen als nachgeordnete.

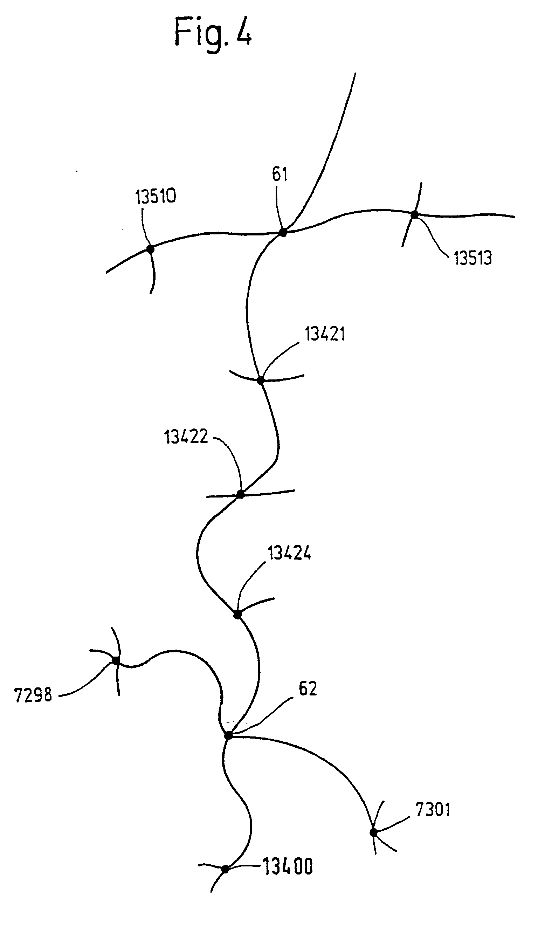

Figur 4 zeigt eine schematische Darstellung einer realen Straßengeometrie, beispielsweise eines BAB(Bundesautobahn)-Netzes mit verschiedenen Kreuzungspunkten 61 und 62 der Bundesautobahnen sowie Abfahrten zu anderen Straßen 7298, 7301, 13421, 13422, 13424, 13510, 13513. Hierbei ist der Straßenverlauf lediglich durch Striche angedeutet, die jedoch deutliche, der Realität entsprechende, Kurven und Biegungen aufweisen. Diese Informationen über den realen geometrischen Straßenverlauf stellen jedoch für die TMC-Ortdatenbasis 6 irrelevante und damit überflüssige Informationen dar.

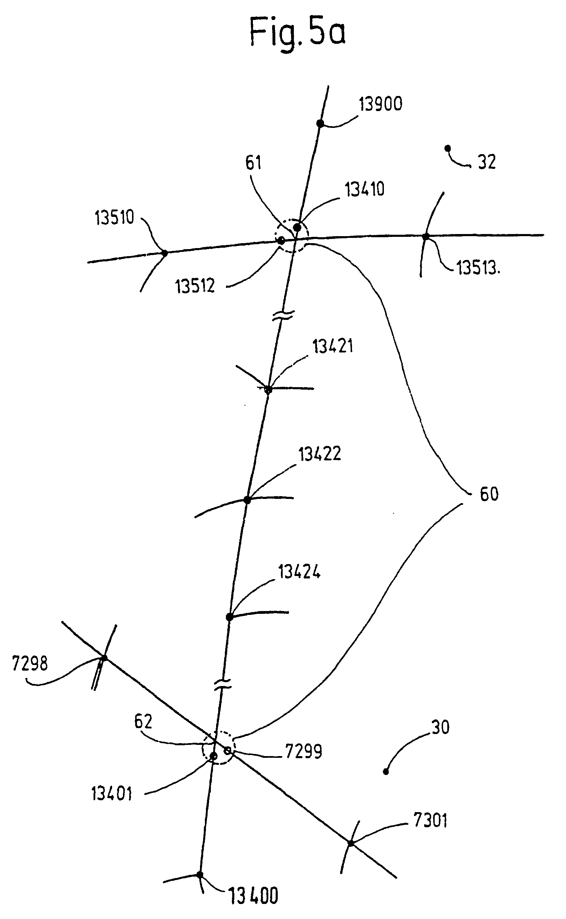

Die Figur 5a zeigt eine schematische Darstellung eines Straßennetzes in der TMC-Ortsdatenbasis 6, die in dem erfindungsgemäßen Navigationssystem Verwendung findet. Gleiche Teile wie in den vorangegangenen Figuren sind mit gleichen Bezugszeichen versehen und nicht nochmals erläutert. Es ist deutlich erkennbar, daß bei dieser Darstellung die Straßengeometrie fehlt. Für eine hinreichende Information des Benutzers beziehungsweise des Fahrers genügt es, in der TMC-Ortsdatenbasis 6 nur ausgewählte Punkte bereitzuhalten, die Entfernungen zwischen diesen Punkten sowie eine Information, welche Punkte Kreuzungspunkte darstellen. Auf diese Weise ist eine eindeutige Zuordnung der abgespeicherten Daten zu den tatsächlichen Abzweigungs- und Kreuzungspunkten möglich.

Im dargestellten Ausführungsbeispiel besteht ein Teilstreckenabschnitt aus den aufeinanderfolgenden Punkten 13900, 13410, 13421, 13422, 13424 und 13401, wobei sich die Punkte 13410 und 13401 gleichzeitig in geringer Entfernung zu Punkten eines jeweils anderen Teilstreckenabschnittes befinden. So wird ein Kreuzungspunkt 61 durch die Punkte 13512 und 13410 repräsentiert, die sich in einer bestimmten festlegbaren Mindestentfernung befinden. Wird eine solche Mindestentfernung unterschritten, so wird in der TMC-Ortsdatenbasis eine sogenannte Cross-Referenz gebildet. Das heißt, der Punkt 13410 erhält einen Verweis auf den Punkt 13512, und umgekehrt. Bei Vorliegen einer solchen Cross-Referenz handelt es sich demzufolge um einen Kreuzungspunkt.

Der Kreuzungspunkt 61 liegt weiterhin zwischen den Punkten 13510 und 13513 und den Punkten 13900 und 13421 eines anderen Teilstreckenabschnittes. Allgemein werden als Kreuzungspunkte von Teilstreckenabschnitten solche Punkte bestimmt, die innerhalb eines begrenzten Areales (von beispielsweise 50 Metern) um sehr nahe beieinander liegende Punkte und zweier verschiedener Teilstrecken liegen. Ein solches Areal ist beispielhaft durch einen unterbrochenen Kreis um die Punkte 61, 13410 und 13512 verdeutlicht. Der Kreuzungspunkt 62 liegt zwischen den Punkten 7298 und 7301 und den Punkten 13424 und 13401 eines anderen Teilstreckenabschnittes.

Alle Straßen beziehungsweise Streckenabschnitte sind weiterhin in Segmente eingeteilt. Der Abschnitt zwischen den beiden Kreuzungspunkten 61 und 62 wird beispielsweise durch das Segment 60 gebildet. Das gesamte in der TMC-Ortsdatenbasis 6 gespeicherte Straßennetz ist in derartige Segmente eingeteilt, wobei den Segmenten eine bestimmte Ortsinformation zugeordnet ist, so daß der Fahrer immer eine Information über den Streckenabschnitt, auf dem er sich gerade befindet, erhalten kann. Ein Segment 60 kann beispielsweise durch zwei Kreuzungspunkte 61 und 62 begrenzt sein, wie in der in Figur 5a gezeigten Darstellung. Ebenso möglich sind jedoch auch kürzere Abschnitte, die beispielsweise durch herausgehobene Zwischenzielorte mit entsprechender Hinweis-Beschilderung am Straßenrand, begrenzt sein können.

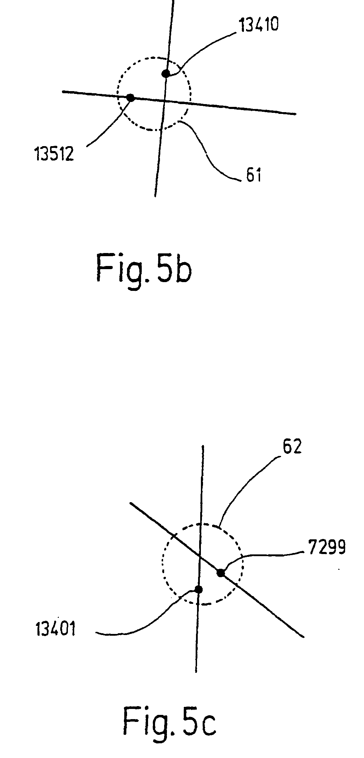

Die Figuren 5b und 5c verdeutlichen jeweils in Detailansichten entsprechend Figur 5a die Generierung der Kreuzungspunkte 61 beziehungsweise 62. Der Kreuzungspunkt 61 wird durch eine Cross-Referenz zwischen zwei auf unterschiedlichen Teilstreckenabschnitten liegenden Punkten 13410 und 13512 beziehungsweise durch Bildung eines Areals um diese zwei Punkte 13410 und 13512 gewonnen. Der Kreuzungspunkt 62 wird analog durch Bildung eines Areals um zwei auf unterschiedlichen Teilstrekkenabschnitten liegenden Punkten 7299 und 13401 gewonnen. Die Areale sind jeweils durch einen Kreis mit unterbrochener Linie verdeutlicht.

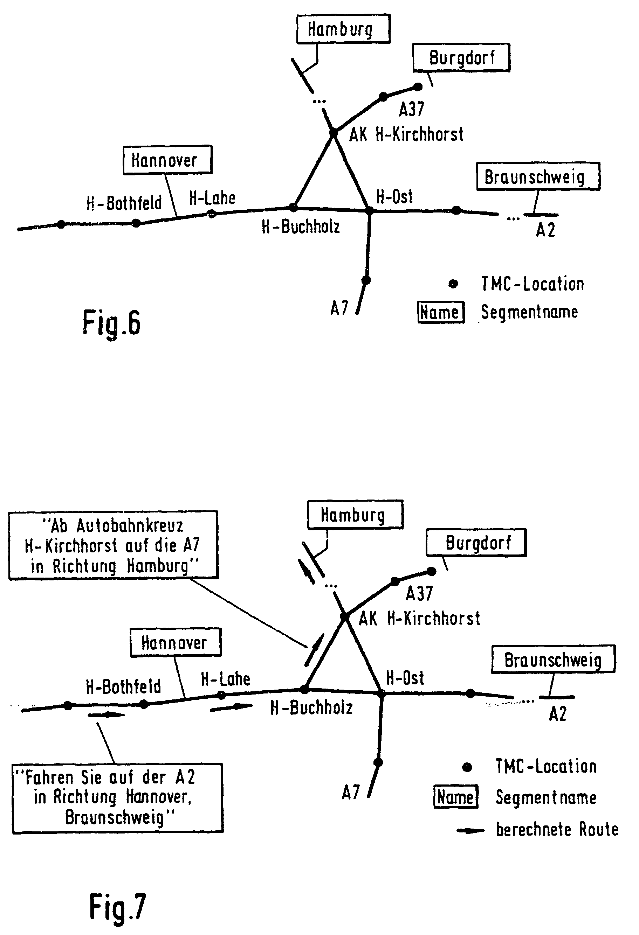

Figur 6 zeigt an einem konkreten Beispiel den Aufbau einer TMC-Datenbank. Hierbei handelt es sich um einen Autobahnbereich in der Nähe von Hannover. In der TMC-Datenbank sind insbesondere als TMC-Locations Auffahrten und Abfahrten sowie Kreuzungen von Autobahnen durch einen schwarzen Punkt gekennzeichnet. Hierbei handelt es sich beispielsweise um die Autobahnausfahrten Hannover-Bothfeld, Hannover-Lahe sowie um die Autobahnkreuze Hannover-Kirchhorst und Hannover-Ost. Mehreren Autobahnausfahrten sind Segmente zugeordnet. Beispielsweise den Autobahnausfahrten auf der Autobahn A2 bis Hannover-Ost ist das Segment Hannover zugeordnet, den Autobahnausfahrten nach Hannover-Ost das Segment Braunschweig. Auf der Autobahn A37 sind den Ausfahrten nach dem Autobahnkreuz Hannover-Kirchhorst das Segment Burgdorf, und der Autobahn A7 das Segment Hamburg zugeordnet.

Figur 7 zeigt nun ein konkretes Beispiel wie die Information eines Autofahrers erfolgt der beispielsweise in Richtung Hamburg fahren möchte. Befindet er sich vor der Autobahnausfahrt Hannover-Bothfeld erhält er die Mitteilung:
"Fahren Sie auf der A2 in Richtung Hannover, Braunschweig".

Diese Mitteilung erhält er dann, wenn mehrere Segmente zur Information des Fahrers zugelassen sind. Ist nur ein Segment zur Information zugelassen erhält er lediglich den Hinweis:
"Fahren Sie auf der A2 in Richtung Braunschweig".

Kurz nach der Autobahnausfahrt Hannover-Lahe wird er den Hinweis erhalten, der in Figur 7 aus Platzgründen nicht dargestellt ist:
"Fahren Sie ab Hannover-Buchholz auf der A37 in Richtung Burgdorf".

Der Autofahrer weiß nun, daß er bei der nächsten Abzweigung in Richtung Burgdorf fahren muß. Burgdorf ist nun jedoch ein Ort, der üblicherweise nicht so bekannt ist. In diesem Falle ist es zweckmäßig, nicht nur das nächste Segment auf der Autobahn A37 mit einem Namen anzugeben, sondern ebenfalls den Namen des nächsten Segments in Fahrtrichtung auf der Autobahn A7, das heißt, daß vor dieser Gabelung auch Segmente der in Fahrtrichtung folgenden Gabelungen ausgegeben werden.

Die Ansage lautet dann:
"Fahren Sie auf der A37 in Richtung Burgdorf, Hamburg".

Würde man an dieser Stelle noch eine Wichtung durchführen, würde die Durchsage lauten:
"Fahren Sie auf der A37 in Richtung Hamburg".

Da Burgdorf ein Ort mit geringerer Bedeutung ist als dies bei Hamburg der Fall ist, wird Burgdorf bei einer Wichtung unterdrückt. Fährt nun der Autofahrer auf der A37, wird kurz vor dem Autobahnkreuz Hannover Kirchhorst die Aussage ausgegeben:
"Ab Autobahnkreuz Hannover-Kirchhorst auf die A7 in Richtung Hamburg".

Der Autofahrer ist daher durch die Segmentnamen über die größeren Orte, die auch auf Streckentafeln auftauchen, informiert und kann daher die Ausgabe des Navigations- bzw. des TMC-Gerätes auf den Streckentafeln verifizieren.

Nun kann es durchaus passieren, daß der Autofahrer einer berechneten Route nicht folgt, und bei dem Autobahndreieck Hannover-Buchholz statt auf die A37 zu wechseln geradeaus in Richtung Braunschweig fährt. Aber auch dann ist es möglich, aufgrund der Ortungsfunktion im Fahrzeug festzustellen, daß er der Empfehlung nicht gefolgt ist. Vor dem Autobahnkreuz Hannover-Ost erhält er dann den Hinweis:
"Ab Autobahnkreuz Hannover-Ost auf die A7 in Richtung Hamburg fahren".

Auch hierbei wird daher der Autofahrer wieder in die richtige Richtung geführt, wobei er im konkreten Fall nur einen kleinen Umweg zu machen hat.

## Patentansprüche

1. Verfahren zur Ausgabe von Fahrtrichtungshinweisen zur Führung eines Fahrzeugführers entlang einer Fahrtroute, wobei die Fahrtroute in Abhängigkeit eines Startorts und eines Zielorts mittels eines Navigationssystems anhand einer digitalen Karte bestimmt wird,
wobei eine TMC-Datenbank vorgesehen ist, die Zwischenzielorte und Segmente enthält, die mit korrespondierenden Orten der digitalen Karte referenziert sind,
wobei die Fahrtrichtungshinweise optisch oder akustisch ausgegeben werden,
**dadurch gekennzeichnet,**
**dass** an zwischen dem Start- und dem Zielort liegenden in der TMC-Datenbank abgelegten Zwischenzielorten die Fahrtrichtungshinweise ausgegeben werden, und dass die Fahrtrichtungshinweise aus Namen der in der TMC-Datenbank abgelegten, den Zwischenzielorten zugeordneten und/oder folgenden Segmenten entnommen werden.

2. Verfahren nach Anspruch 1, **dadurch gekennzeichnet, dass** der Startort und der Zielort mit einer Funkeinrichtung an eine Zentrale übertragen werden, dass die Route und die Fahrtrichtungshinweise aus der in der Zentrale abgelegten TMC-Datenbank und gegebenenfalls aus der digitalen Karte ermittelt werden und dass die Route und die Fahrtrichtungshinweise von der Zentrale an die absendende Stelle übertragen werden.

3. Verfahren nach einem der vorhergehenden Ansprüche, **dadurch gekennzeichnet, dass** die Fahrtrichtungshinweise in einem vorgegebenen Abstand vor dem Zwischenzielort ausgegeben wird.

4. Verfahren nach einem der vorhergehenden Ansprüche, **dadurch gekennzeichnet, dass** auf Grund der auf der TMC-Datenbank abgelegten Informationen über den geographischen Ort der Zwischenzielorte eine Richtungsinformation auf den in Fahrtrichtung nächsten Zwischenzielort ausgegeben wird.

5. Verfahren nach einem der vorhergehenden Ansprüche, **dadurch gekennzeichnet, dass** neben den Segmentnamen einer der nächsten Zwischenzielorte mit ausgegeben wird.

6. Verfahren nach einem der vorhergehenden Ansprüche, **dadurch gekennzeichnet, dass** mehr als ein Segmentname, vorzugsweise in Fahrtrichtung nachfolgende Segmentname ausgegeben werden.

7. Verfahren nach einem der vorhergehenden Ansprüche, **dadurch gekennzeichnet, dass** die TMC-Datenbank weitere markante Punkte, vorzugsweise größere Orte, enthält, die auf in der TMC-Datenbank abgelegte Zwischenzielorte referenziert sind.

8. Verfahren nach einem der vorhergehenden Ansprüche, **dadurch gekennzeichnet, dass** bei an einem Zwischenzielort möglichen unterschiedlichen Fahrtrichtungen die möglichen nachfolgenden Segmentnamen ausgegeben werden und der Benutzer zur Auswahl einer Fahrtrichtung aufgefordert wird.

9. Verfahren nach einem der vorhergehenden Ansprüche, **dadurch gekennzeichnet, dass** an Zwischenzielorten, an denen Merker vom Benutzer gesetzt sind, Fahrtrichtungshinweise ausgegeben werden.

10. Verfahren nach einem der vorhergehenden Ansprüche **dadurch gekennzeichnet, dass** beim Verlassen der vorgegebenen Route eine neue Route berechnet wird und die dazu gehörigen Fahrtrichtungshinweise an den entsprechenden Zwischenzielorten ausgegeben werden.

11. Verfahren nach einem der vorgehenden Ansprüche, **dadurch gekennzeichnet, dass** mittels einem TMC-Empfängers codierte Verkehrshinweise empfangen werden und in die Routenberechnung integriert werden.

12. Verfahren nach Anspruch 11, **dadurch gekennzeichnet, dass** die Verkehrshinweise mit Angaben über die Namen und/oder die Anzahl der in Fahrtrichtung liegenden Zwischenzielorte und/oder Zielorte und/oder Abfahrten und/oder Abzweigungen erfolgt.

13. Verfahren nach Anspruch 12, **dadurch gekennzeichnet, dass** eine Angabe über eine aktuelle Entfernung zu einem Stau und/oder zu einer Verkehrsbehinderung die Anzahl der in Fahrtrichtung liegenden Zwischen-Zielorte und/oder Zielorte (32) und/oder Abfahrten und/oder Abzweigungen zwischen Stau und/oder Verkehrsbehinderung und aktuellem Standort umfasst.

14. Verfahren nach einem der Ansprüche 12 oder 13, **dadurch gekennzeichnet, dass** eine Längeninformation eines Staus und/oder einer Verkehrsbehinderung die Angabe der Anzahl der in Fahrtrichtung liegenden und vom Stau und/oder von der Verkehrsbehinderung betroffenen Zwischen-Zielorte und/oder Zielorte (32) und/oder Abfahrten und/oder Abzweigungen umfasst.

15. Verfahren nach einem der Ansprüche 11-14, **dadurch gekennzeichnet, dass** mit der neu berechneten Route die Fahrtrichtungshinweise modifiziert ausgegeben werden, um einem möglichen Stau auszuweichen.

16. Verfahren nach einem der vorhergehenden Ansprüche, **dadurch gekennzeichnet, dass** die in der TMC-Ortsdatenbasis gespeicherte Straßennetze durch Entfernungen zwischen ausgewählten Punkten (13410,13421,13422,13424,13401,13510, 13512,13513, 7298, 7299, 7301) und/oder Kreuzungspunkten (61,62) charakterisiert werden und dass die Kreuzungspunkte (61,62) vorzugsweise durch Vergleich von 2 nahe beieinander liegenden Punkten (13512,13410,13401,7299) zweier Straßenabschnitte gebildet werden.

17. Verfahren nach Anspruch 16, **dadurch gekennzeichnet, dass** durch gegenseitigen Verweis eines Punktes (13410, 13401) auf einem Straßenabschnitt zu einem nahe entfernten Punkt (13512, 7299) eines anderen Straßenabschnittes eine Cross-Referenz generiert wird und dass eine Cross-Referenz einen Kreuzungspunkt (61, 62) repräsentiert.

18. Verfahren nach einem der vorhergehenden Ansprüche, **dadurch gekennzeichnet, dass** die Ausgabe der Fahrtrichtungshinweise die Namen der in Fahrtrichtung liegenden Segmente (60) und/oder von Kreuzungspunkten umfasst.

19. Verfahren nach Anspruch 18, **dadurch gekennzeichnet, dass** vor Gabelungen auch Segmentnamen der in Fahrtrichtung folgenden Gabelung ausgegeben werden.

20. Verfahren nach einem der vorhergehenden Ansprüche, **dadurch gekennzeichnet, dass** die ausgegebenen Segmentnamen vor Ihrer Ausgabe gewichtet werden, vorzugsweise nach der Größe der bezeichneten Orte, und dass nur der Segmentname mit der größten Wichtung ausgegeben wird.

21. Verfahren nach einem der vorhergehenden Ansprüche, **dadurch gekennzeichnet, dass** der Aufenthaltsort des Fahrzeugs über Positionsbestimmungsmittel, vorzugsweise Satellitennavigationsmittel, bestimmt wird.

22. Verfahren nach einem der Ansprüche 1 bis 20, **dadurch gekennzeichnet, dass** der Aufenthaltsort des Fahrzeugs anhand der Quittierung eines an einem Zwischenzielort ausgegebenen Fahrtrichtungshinweises durch den Benutzer bestimmt wird.

## Claims

1. Method for outputting direction-of-travel advice for guiding a vehicle driver along a route of travel, the route of travel being determined on the basis of a starting location and a destination using a navigation system with reference to a digital map,
where a TMC database is provided which contains intermediate destinations and segments which are referenced with corresponding locations on the digital map,
where the direction-of-travel advice is output visually or audibly,
**characterized**
**in that** the direction-of-travel advice is output at intermediate destinations which are situated between the starting location and the destination and are stored in the TMC database, and
**in that** the direction-of-travel advice is taken from names for the segments which are stored in the TMC database and are associated with and/or follow the intermediate destinations.

2. Method according to Claim 1, **characterized in that** the starting location and the destination are transmitted to a control centre using a radio device, **in that** the route and the direction-of-travel advice are ascertained from the TMC database stored in the control centre and possibly from the digital map, and **in that** the route and the direction-of-travel advice are transmitted from the control centre to the sending location.

3. Method according to one of the preceding claims, **characterized in that** the direction-of-travel advice is output at a prescribed distance before the intermediate destination.

4. Method according to one of the preceding claims, **characterized in that** the TMC database's stored information about the geographical location of the intermediate destinations is taken as a basis for outputting direction information for the next intermediate destination in the direction of travel.

5. Method according to one of the preceding claims, **characterized in that** besides the segment names one of the next intermediate destinations is also output.

6. Method according to one of the preceding claims, **characterized in that** more than one segment name, preferably subsequent segment names in the direction of travel, are output.

7. Method according to one of the preceding claims, **characterized in that** the TMC database contains further notable points, preferably larger locations, which are referenced for intermediate destinations stored in the TMC database.

8. Method according to one of the preceding claims, **characterized in that** when different directions of travel are possible at one intermediate destination the possible subsequent segment names are output and the user is asked to select one direction of travel.

9. Method according to one of the preceding claims, **characterized in that** direction-of-travel advice is output at intermediate destinations at which markers have been set by the user.

10. Method according to one of the preceding claims, **characterized in that** upon leaving the prescribed route a new route is calculated and the associated direction-of-travel advice is output at the appropriate intermediate destinations.

11. Method according to one of the preceding claims, **characterized in that** a TMC receiver is used to receive coded traffic advice and to incorporate it into the route calculation.

12. Method according to Claim 11, **characterized in that** the traffic advice is given with statements about the names and/or the number of intermediate destinations and/or destinations and/or exits and/or turn-offs situated in the direction of travel.

13. Method according to Claim 12, **characterized in that** a statement about a current distance from a tailback and/or from a traffic hold-up includes the number of intermediate destinations and/or destinations (32) and/or exits and/or turn-offs situated in the direction of travel between the tailback and/or traffic hold-up and the current location.

14. Method according to either of Claims 12 and 13, **characterized in that** length information for a tailback and/or for a traffic hold-up includes the statement of the number of intermediate destinations and/or destinations (32) and/or exits and/or turn-offs which are situated in the direction of travel and are affected by the tailback and/or by the traffic hold-up.

15. Method according to one of Claims 11-14, **characterized in that** the direction-of-travel advice is output in modified form with the freshly calculated route, in order to avoid a possible tailback.

16. Method according to one of the preceding claims, **characterized in that** the road networks stored in the TMC location database are **characterized by** distances between selected points (13410, 13421, 13422, 13424, 13401, 13510, 13512, 13513, 7298, 7299, 7301) and/or crossing points (61, 62), and in that the crossing points (61, 62) are preferably formed by comparing 2 closely situated points (13512, 13410, 13401, 7299) on two road sections.

17. Method according to Claim 16, **characterized in that** a cross-reference is generated by reciprocally referring a point (13410, 13401) on a road section to a point (13512, 7299) at a short distance on another road section, and **in that** a cross-reference represents a crossing point (61, 62).

18. Method according to one of the preceding claims, **characterized in that** the output of the direction-of-travel advice includes the names of the segments (60) situated in the direction of travel and/or of crossing points.

19. Method according to Claim 18, **characterized in that** forks are also preceded by the output of segment names for the fork which follows in the direction of travel.

20. Method according to one of the preceding claims, **characterized in that** the segment names which are output are weighted before they are output, preferably according to the size of the designated locations, and **in that** only the segment name with the highest weighting is output.

21. Method according to one of the preceding claims, **characterized in that** the whereabouts of the vehicle is determined using position-finding means, preferably satellite navigation means.

22. Method according to one of Claims 1 to 20, **characterized in that** the whereabouts of the vehicle is determined from the acknowledgement of direction-of-travel advice which is output at an intermediate destination by the user.

## Revendications

1. Procédé d'affichage d'informations relatives à la direction de conduite, permettant de guider un conducteur de véhicule le long d'un itinéraire de conduite, l'itinéraire de conduite étant déterminé en fonction d'un lieu de départ et d'un lieu de destination au moyen d'un système de navigation à l'aide d'une carte numérique, avec une base de données TMC (Traffic Management Center, Centre de gestion du trafic) qui contient des lieux de destination intermédiaires et des segments qui sont référencés avec des lieux correspondants de la carte numérique, et dont les informations relatives à la direction de conduite sont restituées de façon optique ou acoustique,
**caractérisé en ce que**
les informations relatives à la direction de conduite sont affichées au niveau des lieux de destination intermédiaires stockés dans la base de données TMC et situés entre le lieu de départ et le lieu de destination, et les informations relatives à la direction de conduite sont issues des noms des segments stockés dans la base de données TMC, associés aux lieux de destination intermédiaires et/ou suivant ceux-ci.

2. Procédé selon la revendication 1,
**caractérisé en ce que**
le lieu de départ et le lieu de destination sont transmis à une centrale à l'aide d'un système radio, l'itinéraire et les informations relatives à la direction de conduite sont déterminés à partir de la base de données TMC stockée dans la centrale et le cas échéant à partir de la carte numérique, et la route et les informations relatives à la direction de conduite transmise par la centrale à l'endroit d'émission.

3. Procédé selon l'une des revendications précédentes,
**caractérisé en ce que**
les informations relatives à la direction de conduite sont affichées à une distance prédéterminée du lieu de destination intermédiaire.

4. Procédé selon l'une des revendications précédentes,
**caractérisé en ce qu'**
en raison des informations stockées dans la base de données TMC, relatives à l'emplacement géographique des lieux de destination intermédiaires, une information de direction est affichée sur le prochain lieu de destination intermédiaire dans la direction de conduite.

5. Procédé selon l'une des revendications précédentes,
**caractérisé en ce qu'**
outre les noms de segments, l'un des prochains lieux de destination intermédiaires est également affiché.

6. Procédé selon l'une des revendications précédentes,
**caractérisé en ce que**
plus d'un nom de segment, de préférence le nom de segment suivant dans la direction de conduite, est affiché.

7. Procédé selon l'une des revendications précédentes,
**caractérisé en ce que**
la base de données TMC contient d'autres points de référence, de préférence des lieux plus importants, qui sont référencés sur les lieux de destination intermédiaires stockés dans la base de données TMC.

8. Procédé selon l'une des revendications précédentes,
**caractérisé en ce que**
pour différentes directions de conduite possibles au niveau d'un lieu de destination intermédiaire, les noms de segment suivants possibles sont affichés et l'utilisateur est invité à choisir une direction de conduite.

9. Procédé selon l'une des revendications précédentes,
**caractérisé en ce qu'**
au niveau des lieux de destination intermédiaires repérés par l'utilisateur, des informations relatives à la direction de conduite sont affichées.

10. Procédé selon l'une des revendications précédentes,
**caractérisé en ce que**
lorsque l'on quitte l'itinéraire prédéterminé, un nouvel itinéraire est calculé et les informations relatives à la direction de conduire associées sont affichées au niveau des lieux de destination intermédiaires correspondants.

11. Procédé selon l'une des revendications précédentes,
**caractérisé en ce que**
des informations relatives au trafic sont reçues au moyen d'un récepteur TMC et sont intégrées dans le calcul de l'itinéraire.

12. Procédé selon la revendication 11,
**caractérisé en ce que**
les informations relatives au trafic contiennent des indications sur les noms et/ou le nombre des lieux de destination intermédiaires présents dans la direction de conduite et/ou sur les lieux de destination et/ou sorties et/ou déviations.

13. Procédé selon la revendication 12,
**caractérisé en ce qu'**
une indication sur une distance actuelle par rapport à un embouteillage et/ou par rapport à une entrave à la circulation comprend le nombre des lieux de destination intermédiaires présents dans la direction de conduite et/ou les lieux de destination (32) et/ou les sorties et/ou les déviations présent(e)s entre l'embouteillage et/ou l'entrave à la circulation et le lieu actuel.

14. Procédé selon l'une des revendications 12 ou 13,
**caractérisé en ce qu'**
une information relative à la longueur d'un embouteillage et/ou d'une entrave à la circulation contient l'indication du nombre des lieux de destination intermédiaires et/ou lieux de destination (32) et/ou sorties et/ou déviations présent(e)s dans la direction de conduite et concernés par l'embouteillage et/ou par l'entrave à la circulation.

15. Procédé selon l'une des revendications 11 à 14,
**caractérisé en ce qu'**
avec l'itinéraire nouvellement calculé, les informations relatives à la direction de conduite sont restituées de façon modifiée, afin d'éviter un possible embouteillage.

16. Procédé selon l'une des revendications précédentes,
**caractérisé en ce que**
les réseaux routiers stockés dans la base de données de lieux TMC sont **caractérisés par** des distances entre des points sélectionnés (13410, 13421, 13422, 13424, 13401, 13510, 13512, 13513, 7298, 7299, 7301) et/ou par des points de croisement (61, 62), et les points de croisement (61, 62) sont de préférence formés par la comparaison de deux points situés à proximité l'un de l'autre (13512, 13410, 13401, 7299) de deux tronçons de route.

17. Procédé selon la revendication 16,
**caractérisé en ce que**
par un renvoi mutuel entre un point (13410, 13401) présent sur un tronçon de route et un point situé à proximité (13512, 7299) d'un autre tronçon de route, on génère une référence carrefour, et une référence carrefour représente un point de croisement (61, 62).

18. Procédé selon l'une des revendications précédentes,
**caractérisé en ce que**
l'affichage des informations relatives à la direction de conduite comprend les noms des segments (60) présents dans la direction de conduite et/ou des points de croisement.

19. Procédé selon la revendication 18,
**caractérisé en ce qu'**
avant des bifurcations, des noms de segments de la bifurcation suivante dans la direction de conduite sont également affichés.

20. Procédé selon l'une des revendications précédentes,
**caractérisé en ce que**
les noms de segments affichés sont pondérés avant leur restitution, de préférence selon la taille des lieux désignés, et seul le nom de segment ayant la pondération la plus importante est affiché.

21. Procédé selon l'une des revendications précédentes,
**caractérisé en ce que**
le lieu de séjour du véhicule est déterminé par le biais de moyens de détermination de position, de préférence des moyens de navigation par satellite.

22. Procédé selon l'une des revendications 1 à 20,
**caractérisé en ce que**
le lieu de séjour du véhicule est déterminé à l'aide de l'accusé de réception, par l'utilisateur, d'une information relative à la direction de conduite affichée au niveau d'un lieu de destination intermédiaire.
